# EUROPEAN PATENT APPLICATION

(11) **EP 2 744 251 A1**
(43) Date of publication of application: **18.06.2014**
(21) Application number: 12821570.4
(22) Date of filing: 25.07.2012
(51) Int. Cl.: H04W 12/08, H04M 1/00, H04M 11/00, H04W 48/04, H04W 64/00

(54) **NETWORK SYSTEM, MOBILE COMMUNICATION DEVICE AND PROGRAM**

(30) Priority: 10.08.2011 JP 2011175295
(71) Applicant: Hitachi Solutions, Ltd., Tokyo 140-0002 (JP)
(72) Inventor: YADA Tomoki, Tokyo 140-0002 (JP)
(74) Representative: Gleiss, Alf-Olav
(86) International application number: PCT/JP2012/068756
(87) International publication number: WO 2013/021814

(57) **Abstract**

Leakage of information stored in a mobile communication device via a network is prevented. To this end, a mobile communication device that together with an authentication server forms part of a network system is equipped with: a functional unit configured to detect a change in information on the physical location of the device itself and/or information on the location of the device itself on a network; a functional unit configured to, upon detection of the change, transmit to the authentication server the information on the location of the device itself and/or the information on the location of the device itself on the network; and a functional unit configured to receive from the authentication server a communication control policy corresponding to the information on the location of the device itself and/or the information on the location of the device itself on the network, and apply the communication control policy to the device itself.

## Description

### Technical Field

The present invention relates to a communication control technology for mobile communication devices. For example, the present invention relates to a network system including a mobile communication device and an authentication server, a mobile communication device, and a communication control program therefor.

### Background Art

With the spread of mobile communication devices typified by smartphones or tablet devices in recent years, the use of mobile communication devices for business operations has started to be considered. For example, usage patterns are considered in which an employee who is performing field work connects to an intranet of an office from outside of the office using a mobile communication device, and stores into the mobile communication device documents that are necessary for business operations or sends or receives e-mail. If a mobile communication device is able to be used for business operations, it becomes possible for a business operation, which has been conventionally able to be performed only within an office, to be performed outside the office in the period between one field work and another and the like, which is considered to improve the efficiency of the business operation.

A typical example of a technology for connecting a mobile communication device to an intranet of an office from outside the office is a technology called VPN (Virtual Private Network). For example, a communication protocol called IPsec (IP Security) shown in Non Patent Literature 1 is used.

### Citation List

### Non Patent Literature

Non Patent Literature 1: Tatsuya BABA, "Mastering IP Sec, 2nd edition," O'Reilly Japan, Inc., August 23, 2006

### Summary of Invention

### Technical Problem

However, with the conventional VPN technology, it would be impossible to, after an employee has stored business information from an intranet of an office via VPN using a mobile communication device, prevent the mobile communication device from being used through direct connection to a network outside the office, such as the Internet, without the use of VPN. Therefore, there is a risk that the business information may leak via the Internet. Because of such risk, the use of mobile communication devices for business operations has been hindered so far.

In order to avoid a circumstance in which business information leaks from a mobile communication device, it is necessary to ensure that communication data to be transmitted from the mobile communication device will be surely transmitted via an intranet of office using VPN. For example, when a mobile communication device accesses a webpage and the like on the Internet, setting the communication path to be via an intranet of an office will be able to prohibit actions such as uploading of business information to the webpage due to the presence of a firewall provided in the office. That is, a mobile communication device for use in business operations is required to have a mechanism that allows the device to be able to communicate with only a specific device such as a VPN device provided in an office.

### Solution to Problem

In order to realize the aforementioned communication control technology, the inventor proposes, for a network system including a mobile communication device and an authentication server, mounting the following functions on the mobile communication device and the authentication server.

First, the mobile communication device should be mounted with (1) a functional unit configured to detect a change in information on the physical location of the device itself and/or information on the location of the device itself on a network, (2) a functional unit configured to, upon detection of the change, transmit to the authentication server the information on the location of the device itself and/or the information on the location of the device itself on the network, and (3) a functional unit configured to receive from the authentication server a communication control policy corresponding to the information on the location of the device itself and/or the information on the location of the device itself on the network, and apply the communication control policy to the device itself.

Meanwhile, the authentication server should be mounted with (1) a functional unit configured to receive from the mobile communication device information on the location of the device itself and/or information on the location of the device itself on the network, (2) a functional unit configured to retrieve from a management table a communication control policy corresponding to the information on the location and/or the information on the location on the network that has/have been received, and (3) a functional unit configured to transmit the retrieved communication control policy to the mobile communication device.

### Advantageous Effects of Invention

According to the present invention, communication from a mobile communication device is controlled based on a communication control policy that is determined by an authentication server in response to information on the physical location of the device itself or the location of the device itself on a network. For example, if the communication control policy describes that communication to be performed outside the office should be made via an authentication server, it becomes possible to avoid leakage of business information from the mobile communication device. Other problems, configurations, and advantageous effects will become apparent from the following description of embodiments.

### Brief Description of Drawings

[Fig. 1] Fig. 1 is a conceptual view of a network system in accordance with an embodiment.
[Fig. 2] Fig. 2 is a functional configuration view of a mobile communication device in accordance with an embodiment.
[Fig. 3] Fig. 3 is a functional configuration view of an authentication server in accordance with an embodiment.
[Fig. 4] Fig. 4 is a conceptual structure view of a policy database in accordance with an embodiment.
[Fig. 5] Fig. 5 is a flowchart illustrating a procedure for creating a policy database in accordance with an embodiment.
[Fig. 6] Fig. 6 is a flowchart illustrating a process procedure performed when a mobile communication device in accordance with an embodiment is turned on.
[Fig. 7] Fig. 7 is a flowchart illustrating a procedure for selecting policy information executed by an authentication server in accordance with an embodiment.
[Fig. 8] Fig. 8 is a flowchart illustrating a procedure for re-applying policy information to a mobile communication device in accordance with an embodiment.

### Description of Embodiments

Hereinafter, embodiments of the present invention will be described with reference to the drawings. It should be noted that the embodiments of the present invention are not limited to those described below, and various variations are possible insofar as they fall within the spirit and scope of the present invention. In addition, members having the same function are denoted by the same or associated reference numbers throughout all of the drawings illustrating the embodiments, and repeated description thereof will be omitted.

### [System Configuration]

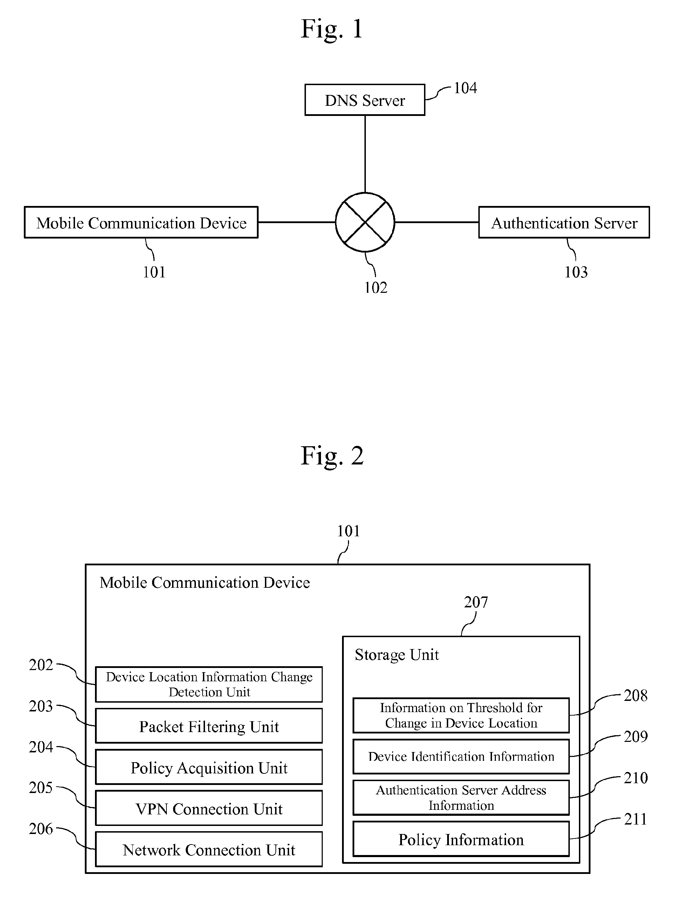

Fig. 1 illustrates an exemplary conceptual configuration of a network system in accordance with an embodiment. The system includes a mobile communication device 101, a network 102, an authentication server 103, and a DNS server 104. As shown, the mobile communication device 101, the authentication server 103, and the DNS server 104 are mutually connected via the network 102.

Although the details of the network 102 are not shown in this embodiment, the network 102 may include any physical network or any connection pattern as long as it allows transmission of information. In addition, the network 102 may include one or both of a wired network and a wireless network.

Although Fig. 1 illustrates a single mobile communication device 101, a single authentication server 103, and a single DNS server 104 for purposes of simplicity, the number of each component is not limited thereto as long as it is one or more.

Hereinafter, individual components that form the network system illustrated in Fig. 1 will be described.

### [Configuration of the mobile communication device 101]

Fig. 2 illustrates a functional block configuration of the mobile communication device 101. The mobile communication device 101 includes a device location information change detection unit 202, a packet filtering unit 203, a policy acquiring unit 204, a VPN connection unit 205, a network connection unit 206, and a storage unit 207. Each portion other than the storage unit 207 may be configured as either hardware or a function on software.

In this embodiment, the mobile communication device 101 is assumed to be a smartphone or a tablet device. Needless to say, the mobile communication device 101 is not limited to such devices, and may include a laptop computer device and a dedicated portable device. Though not shown, the mobile communication device 101 has typical devices mounted thereon as needed. For example, the mobile communication device 101 has mounted thereon a CPU, memory, an input instruction device (i.e., a touch panel), a GPS (Global Positioning System) receiving device, and a wireless communication device compatible with Wi-Fi (registered trademark).

The network connection unit 206 is a device that connects the mobile communication device 101 and the network 102, and corresponds to, for example, a wireless LAN (Local Area Network) device or a 3G (third-generation mobile communication system) wireless device.

The device location information change detection unit 202 is a device or a program that executes a process for detecting a change in the location of the mobile communication device 101. In this specification, the term "location" means the location in terms of a network or the physical location of the mobile communication device 101, or a combination thereof. For example, the "location" herein corresponds to the location on a network that is identified by an IP address assigned to the network connection unit 206, the physical location of the mobile communication device 101 on the globe detected by a GPS device provided in the mobile communication device 101, SSID (Service Set ID) of an access point of a wireless LAN to which the mobile communication device 101 is connected, the location in terms of a network or the physical location that is based on information such as MAC address, and a combination of such locations.

It should be noted that, for purposes of simplicity, the following description is made using the location of the mobile communication device 101 on a network that is identified by an IP address assigned to the network connection unit 206 of the mobile communication device 101, and the physical location thereof obtained with the GPS.

The device location information change detection unit 202 refers to information 208 on the threshold for a change in the device location stored in the storage unit 207, and detects a change in the location of the device. That is, the device location information change detection unit 202 compares each of the location on a network identified by the IP address and the physical location obtained with the GPS with the information 208 on the threshold for a change in the device location, and, when one of the locations does not satisfy the condition described in the information 208 on the threshold for a change in the device location, detects that the location has changed. The information 208 on the threshold for a change in the device location is described below.

The packet filtering unit 203 is a device or a program that, on the basis of policy information 211 stored in the storage unit 207, implements communication control of, for example, allowing or denying only communication with a device having a specific IP address.

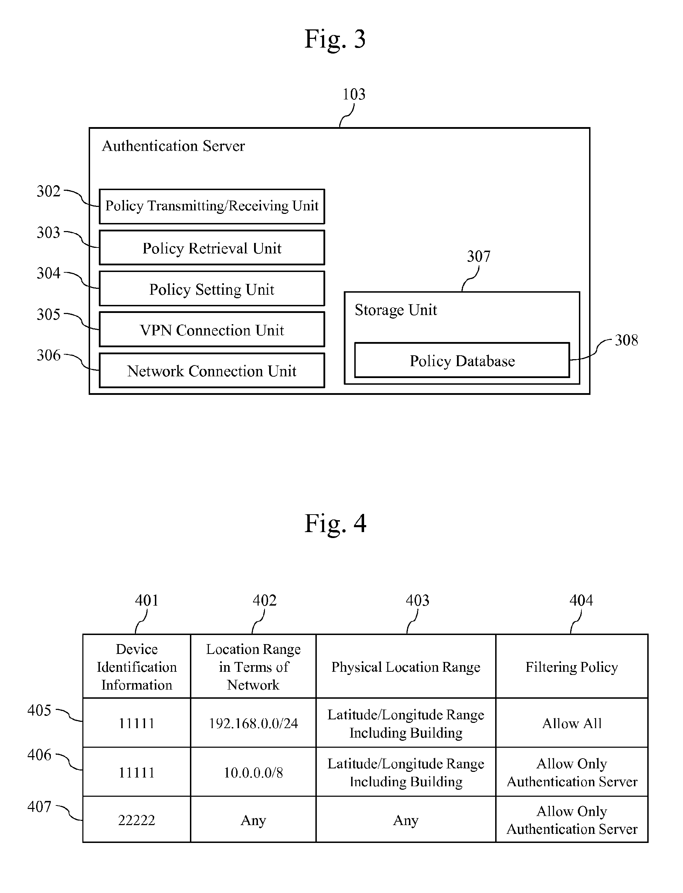

The policy acquisition unit 204 is a device or a program that executes a process of acquiring the policy information 211 from a policy transmitting/receiving unit 302 of the authentication server 103 (Fig. 3).

The VPN connection unit 205 is a device or a program that connects to a VPN connection unit 305 of the authentication server 103 (Fig. 3), and executes a process that is necessary for VPN communication.

### [Configuration of the storage unit 207 of the mobile communication device 101]

The storage unit 207 is used to store information that is necessary to implement the communication control in accordance with this embodiment. For example, the information 208 on the threshold for a change in the device location, device identification information 209, authentications server address information 210, and the policy information 211 are stored in the storage unit 207. It should be noted that any given information (not shown) may be stored in the storage unit 207.

The information 208 on the threshold for a change in the device location is the information used for the device location information change detection unit 202 to determine if the location of the mobile communication device 101 (the device itself) has changed. The information 208 on the threshold for a change in the device location includes, for example, (1) the latitude/longitude range including a building of an office, (2) the range of the IP address assigned to the network connection unit 206 of the mobile communication device 101 in an intranet of the office, and (3) both of (1) and (2).

For example, if the latitude/longitude range including a building of an organization to which a user belongs, such as a company, is stored as the information 208 on the threshold for a change in the device location, the device location information change detection unit 202 detects, when the observed value of the GPS of the mobile communication device 101 is outside the stored predetermined latitude/longitude range, a motion of the mobile communication device 101 (the device itself) from inside of the office to the outside of the office.

The device identification information 209 is the information for uniquely identifying the mobile communication device 101, and for example, corresponds to a device-specific number of the mobile communication device 101, a pair of a user name and a password, MAC address of the network connection unit 206 of the mobile communication device 101, and a combination of such information.

The authentication server address information 210 is given by the IP address or the domain name of the authentication server 103.

The policy information 211, which is described in detail below, corresponds to a condition that is applied to the communication control for the mobile communication device 101.

### [Configuration of the authentication server 103]

Fig. 3 shows the configuration of the authentication server 103. The authentication server 103 includes the policy transmitting/receiving unit 302, a policy retrieval unit 303, a policy setting unit 304, the VPN connection unit 305, a network connection unit 306, and a storage unit 307.

The policy transmitting/receiving unit 302 is a device or a program that is connected from the policy acquisition unit 204 of the mobile communication device 101, and transmits the policy information 211 to the policy acquisition unit 204.

The policy retrieval unit 303 is a device or a program that, on the basis of the device identification information 209 of the mobile communication device 101 and the device location information detected by the device location information change detection unit 202, executes a process of retrieving the corresponding policy information 211 from the policy database 308 in which a plurality of pieces of policy information 211 are stored.

The policy setting unit 304 is a device or a program that, upon receiving an instruction to add, modify, or delete the policy information 211 from an administrator of the authentication server 103 via a user interface, executes a process of adding, modifying, or deleting the policy information 211 to/from the policy database 308.

The VPN connection unit 305 is a device or a program that is connected from the VPN connection unit 205 of the mobile communication device 101 and executes a process that is necessary for VPN communication.

The network connection unit 306 is a device that connects to the mobile communication device 101 or the like, and corresponds to, for example, a NIC (network Interface card).

### [Configuration of the storage unit 307 in the authentication server 103]

The storage unit 307 includes the policy database 308 in which the policy information 211 is stored. Though not shown, any information other the policy database 308 may be stored in the storage unit 307.

In Fig. 3, the VPN connection unit 305 is provided in the authentication server 103, but the configuration is not necessarily limited thereto. For example, the VPN connection unit 305 may be provided in a server that is different from the authentication server 103, so that two servers that are the authentication server 103 and the VPN server may be separately provided.

### [Configuration of the policy database 308]

Fig. 4 shows an exemplary structure of the policy database 308. The policy database 308 has stored therein a plurality of pieces of policy information 211 including device identification information 401, a location range 402 in terms of network, a physical location range 403, and a filtering policy 404. In Fig. 4, three pieces of policy information 405 to 407 are shown as examples.

The policy information 405 is the information for the mobile communication device 101 whose device identification information 401 is "11111," and indicates that when the IP address assigned to the network connection unit 206 is included in the location range 402 in terms of network: "192.168.0.0/24" and also when the physical location of the mobile communication device 101 obtained with the GPS is included in the physical location range 403: "Latitude/Longitude Range Including Building," the filtering policy 404: "Allow All" should be applied, that is, all communication from the mobile communication device 101 whose device identification information 401 is "11111" should be allowed.

A circumstance in which the policy information 405 applies includes a case where, for example, the mobile communication device 101 is used in an office, and the mobile communication device 101 is connecting to a Wi-Fi access point in the office. In such a circumstance, communication from the mobile communication device 101 to the Internet is performed via an intranet of the office. Thus, the communication can be made to pass through a filtering device for websites, e-mail, and the like that is installed in the intranet of the office.

The policy information 406 is the information for the mobile communication device 101 whose device identification information 401 is "11111," and indicates that when the IP address assigned to the network connection unit 206 is included in the location range 402 in terms of network: "10.0.0.0/8" and also when the physical location of the mobile communication device 101 obtained with the GPS is included in the physical location range 403: "Latitude/Longitude Range Including Building," the filtering policy 404: "Allow Only Authentication Server" should be applied, that is, communication from the mobile communication device 101 whose device identification information 401 is "11111" should be allowed only with the authentication server.

A circumstance in which the policy information 406 applies includes a case where, for example, the mobile communication device 101 is used in an office, but the mobile communication device 101 is directly connected to the Internet through 3G wireless communication. In such a case, communication from the mobile communication device 101 to the Internet is not performed via an intranet of the office. That is, filtering for websites, e-mail, and the like cannot be performed. Such a circumstance corresponds to a case where the mobile communication device 101 is located in the office physically, but is located outside the office in terms of network. Thus, in such a circumstance, a filtering policy 404 is applied by which communication from the mobile communication device 101 is allowed only with the authentication server 103, and the communication path is forcibly set to be via the intranet of the office.

The policy information 407 is the information for the mobile communication device 101 whose device identification information 401 is "22222," and indicates that communication from the mobile communication device 101 is allowed only with the authentication server regardless of the location in terms of network that is identified by the IP address assigned to the network connection unit 206 or the physical location obtained with the GPS.

A circumstance in which the policy information 407 applies corresponds to a case where communication from the mobile communication device 101 is intended to be surely performed via the authentication server with a view to maximize the security level.

Handling of cases where no policy information applies is not defined herein. However, in such a case, an operation of allowing communication with only the authentication server 103 may be performed, for example.

### [Configuration of the DNS server 104]

The DNS server 104 may be any device that can associate the domain name and the IP address with each other, and corresponds to a device having a program called "BIND," for example.

### [Communication control procedures]

Next, process procedures for controlling communication of the mobile communication device 101 in the aforementioned network system will be described. First, a procedure in which an administrator of the authentication server 103 creates the policy database 308 as the pre-setting for controlling the communication of the mobile communication device 101 will be described. Next, a procedure in which the mobile communication device 101 acquires the policy information 211 from the authentication server 103 and controls the communication will be described. Finally, a procedure in which, when the mobile communication device 101 has moved and a change in the location thereof is detected, the policy information 211 is acquired again to start communication control again will be described.

### [Procedure for creating the policy database]

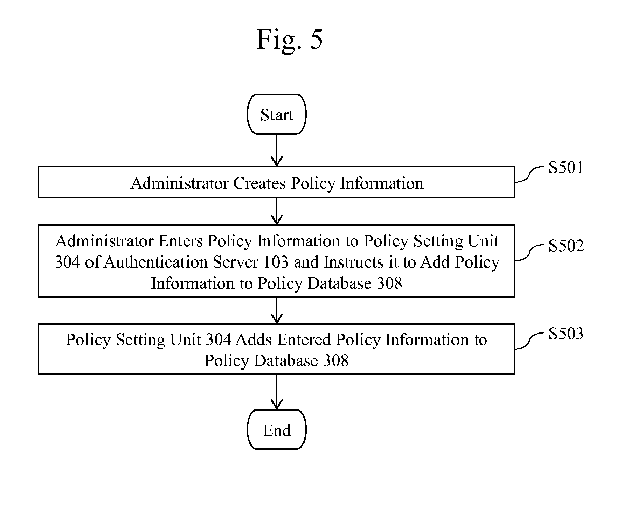

Fig. 5 illustrates a procedure in which an administrator of the authentication server 103 creates the policy database 308.

The administrator of the authentication server 103 creates (any number of pieces of) policy information for the mobile communication device 101 to connect to the authentication server 103 (S501). Examples of the policy information correspond to 405 to 407 in Fig. 4 described above.

Next, the administrator of the authentication server 103 enters the policy information created in step S501 to the policy setting unit 304, and instructs the policy setting unit 304 to add the policy information to the policy database 308 (S502).

Finally, the policy setting unit 304 adds the policy information received in step S502 to the policy database 308 (S503).

Although Fig. 5 illustrates the procedure for newly creating policy information, a similar procedure may be performed when the policy information in the policy database 308 is deleted or modified.

### [Procedure of a process performed when the mobile communication device 101 is turned on]

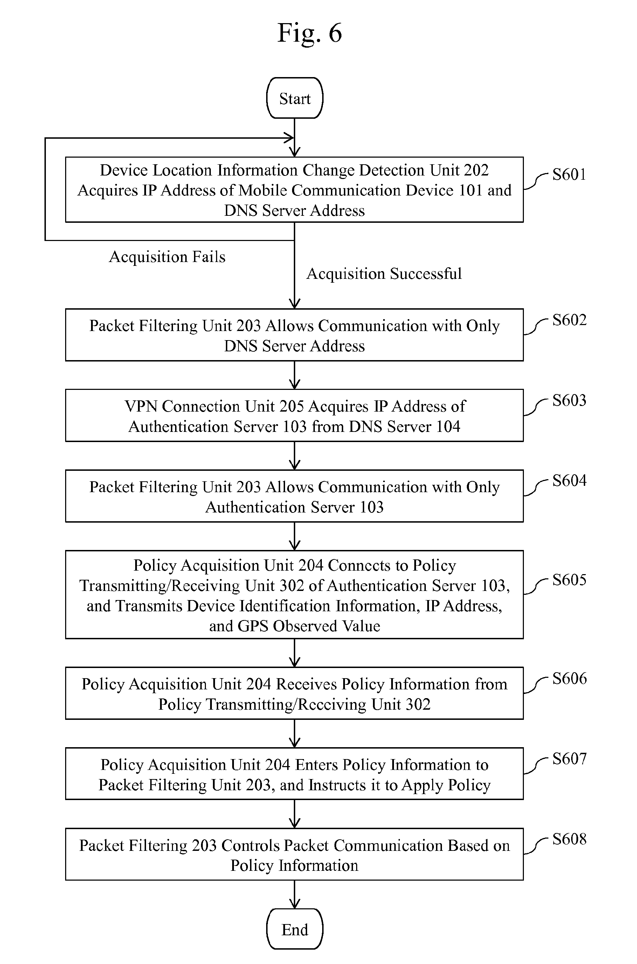

Fig. 6 illustrates a procedure performed when the mobile communication device 101 is turned to start a system until when a policy is applied.

After the mobile communication device 101 is turned on, the device location information change detection unit 202 first acquires the IP address and the DNS server address from the network connection unit 206 of the mobile communication device 101 (S601). Herein, when acquisition of the IP address and the DNS server address has failed as a result of the network connection unit 206 being not functioning, step S601 is repeated after a given time interval has elapsed.

When acquisition of the IP address and the DNS server address is successful in step S601, the packet filtering unit 203 performs control so as to allow the mobile communication device 101 to communicate with only the DNS server 104 indicated by the DNS server address (S602). The communication control method herein corresponds to "iptables" of Linux (registered trademark), for example.

Next, the VPN connection unit 205 of the mobile communication device 101, in order to acquire an IP address corresponding to the domain name of the authentication server 103 described in the authentication server address information 212, inquires of the DNS server 104 and acquires the IP address of the authentication server 103 (S603). It should be noted that when not the domain name but the IP address of the authentication server 103 is described in the authentication server address information 210, the process of step S603 is omitted.

Next, the packet filtering unit 203 of the mobile communication device 101 performs control so as to allow the mobile communication device 101 to communicate with only the authentication server 103 based on the IP address of the authentication server 103 acquired in step S603 (S604).

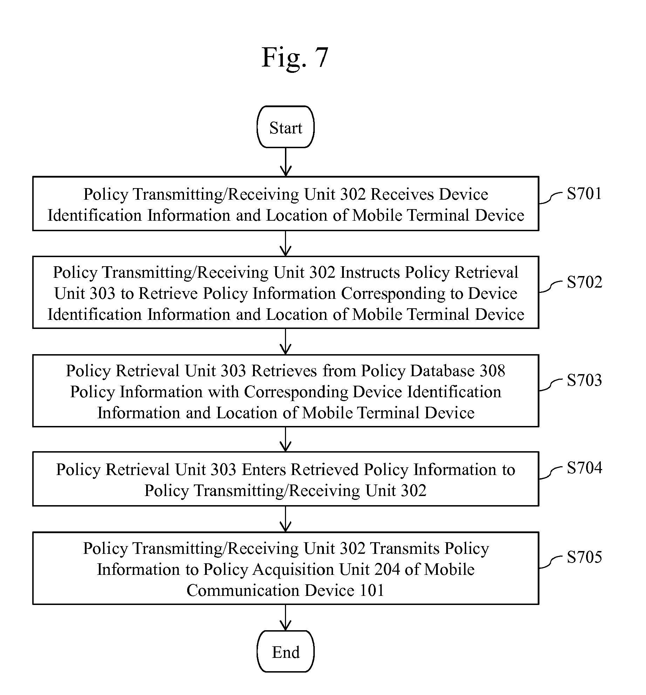

The policy acquisition unit 204 of the mobile communication device 101 transmits the device identification information 209, the IP address of the mobile communication device 101, and the observed value of the GPS to the authentication server 103, and sends a request to acquire the policy information 211 (S605). It should be noted that the process procedure (Fig. 7) performed when the authentication server 103 is requested to provide the policy information 211 is described below.

After that, the policy acquisition unit 204 of the mobile communication device 101 receives the policy information 211 from the policy transmitting/receiving unit 302 of the authentication server 103 (S606).

Next, the policy acquisition unit 204 of the mobile communication device 101 enters the policy information 211 to the packet filtering unit 203 and instructs it to apply the policy (S607).

The packet filtering 203 of the mobile communication device 101 controls the communication based on the filtering policy 404 of the received policy information 211 (S608).

### [Procedure for selecting a policy]

Fig. 7 illustrates a process procedure performed when the authentication server 103 is requested by the mobile communication device 101 to transmit the policy information 211.

First, the policy transmitting/receiving unit 302 of the authentication server 103 receives from the mobile communication device 101 the device identification information 209, the IP address of the mobile communication device 101, and the observed value of the GPS (S701).

The policy transmitting/receiving unit 302 of the authentication server 103 instructs the policy retrieval unit 303 to retrieve the policy information 211 corresponding to the device identification information 209, the IP address of the mobile communication device 101, and the observed value of the GPS (S702).

Next, the policy retrieval unit 303 of the authentication server 103 retrieves from the policy database 308 the policy information 211 in which the device identification information 209 is identical, the IP address of the mobile communication device 101 is included in the location range 402 in terms of network and further, the observed value of the GPS of the mobile communication device 101 is included in the physical location range 403 (S703).

The policy retrieval unit 303 of the authentication server 103 enters the retrieved policy information 211 to the policy transmitting/receiving unit 302 (S704).

The policy transmitting/receiving unit 302 of the authentication server 103 transmits the policy information 211 to the policy acquisition unit 204 of the mobile communication device 101 (S705).

Accordingly, the policy information 211 corresponding to the location of the mobile communication device 101 is applied to the mobile communication device 101. Accordingly, it is ensured that communication from the mobile communication device 101 will satisfy the conditions described in the filtering policy 404.

For example, when the filtering policy 404 indicates "Allow Only Authentication Server," the mobile communication device 101 will no longer be able to communicate directly with various servers on the Internet. In order to connect to such server and the like, it is necessary that the VPN connection unit 205 of the mobile communication device 101 and the VPN connection unit 305 of the authentication server 103 be connected via VPN so that communication will be performed via the authentication server 103. Herein, providing a firewall or the like at a position between the authentication server 103 and the server will allow the communication from the mobile communication device 101 to be adequately filtered.

### [Procedure for re-applying a policy when the location of the mobile communication device 101 has changed]

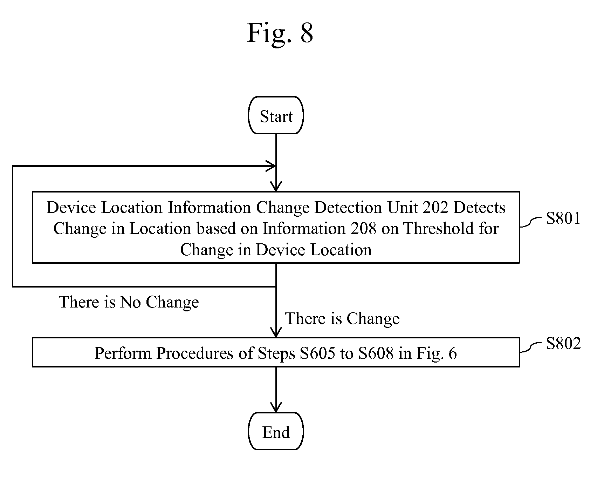

Fig. 8 illustrates a procedure for re-applying a policy when the location in terms of network or the physical location of the mobile communication device 101 has changed.

The device location information change detection unit 202 of the mobile communication device 101 detects a change in location based on the information 208 on the threshold for a change in the device location (S801).

When a change is not detected in step S801, step S801 is repeated after a given time period has elapsed.

When a change is detected in step S801, the procedures of steps S605 to S608 in Fig. 6 are performed.

A circumstance that is supposed in the procedure of Fig. 8 is shown below. It is assumed that the mobile communication device 101 connects to a Wi-Fi access point in the office, and the filtering policy 404 indicates "Allow All." Further, it is also assumed that since communication from the mobile communication device 101 is performed via an intranet of the office, the communication is filtered by a filtering device for websites and e-mail that is installed in the intranet of the office.

Under such conditions, it is assumed that the user of the mobile communication device 101 stops using the Wi-Fi and attempts to perform 3G communication. If the filtering policy 404 remains "Allow All," direct communication with the server on the Internet will be realized through 3G communication. This, however, will not be able to avoid leakage of business information since filtering of the communication cannot be performed.

Thus, when the location of the mobile communication device 101 in terms of network has changed as described above, it is necessary to allow an adequate filtering policy 404 to be applied. Thus, the procedure in Fig. 8 is prepared and an automatic resetting mechanism is introduced with which, when the communication has switched from Wi-Fi to 3G, for example, the mobile communication device 101 acquires the filtering policy 404 again, and the communication is changed from "Allow All" to "Allow Only Authentication Server."

### [Advantageous Effects]

As described above, in the network system in accordance with this embodiment, communication from the mobile communication device 101 can be controlled based on the policy information 211 that is determined by the authentication server 103 in response to the physical location or the IP address of the mobile communication device 101. For example, it is possible to fix communication, which is to be performed outside an office, to communication performed via the authentication server 103 in the office, using the policy information 211. In addition, even when communication from, in terms of the physical location, the inside of an office is to be performed, if a change in the location, in terms of network, to an outside network that is not via an intranet of the office occurs, it is possible to force the communication to be performed via the authentication server 103 as in the case where the communication is performed outside the office. Accordingly, it is possible to effectively avoid a circumstance in which business information may leak from the mobile communication device 101.

### [Other Embodiments]

The present invention is not limited to the aforementioned embodiments, and includes various variations. For example, although the aforementioned embodiments have been described in detail to clearly illustrate the present invention, the present invention need not include all of the structures described in the embodiments. It is possible to replace a part of a structure of an embodiment with a structure of another embodiment. In addition, it is also possible to add, to a structure of an embodiment, a structure of another embodiment. Further, it is also possible to, for a part of a structure of each embodiment, add/remove/substitute a structure of another embodiment.

Some or all of the aforementioned structures, functions, processing units, processing means, and the like may be implemented as an integrated circuit or other hardware, for example. Alternatively, each of the aforementioned structures, functions, and the like may be implemented such that a processor analyzes and executes a program that implements each function. That is, each of the aforementioned structures, functions, and the like may be implemented as software. Information such as the program that implements each function, tables, and files can be stored in a storage device such as memory, a hard disk, or a SSD (Solid State Drive); or a storage medium such as an IC card, an SD card, or a

### DVD.

In addition, the control lines and information lines represent those that are considered to be necessary for description purposes, and represent not all control lines and information lines that are necessary for a product. In practice, almost all structures may be considered to be mutually connected.

### Reference Signs List

- 101: Mobile communication device
- 102: Network
- 103: Authentication server
- 104: DNS server
- 202: Device location information change detection unit
- 203: Packet filtering unit
- 204: Policy acquisition unit
- 205: VPN connection unit
- 206: Network connection unit
- 207: Storage unit
- 208: Information on threshold for change in device location
- 209: Device identification information
- 210: Authentication server address information
- 211: Policy information
- 302: Policy transmitting/receiving unit
- 303: Policy retrieval unit
- 304: Policy setting unit
- 305: VPN connection unit
- 306: Network connection unit
- 307: Storage unit
- 308: Policy database
- 401: Device identification information
- 402: Location range in terms of network
- 403: Physical location range
- 404: Filtering policy
- 405: Example of policy information
- 406: Example of policy information
- 407: Example of policy information

## Claims

1. A network system comprising a mobile communication device and an authentication server,
wherein the mobile communication device includes
a functional unit configured to detect a change in information on a physical location of the device itself and/or information on a location of the device itself on a network,
a functional unit configured to, upon detection of a change in the location information, transmit to the authentication server information on the location of the device itself and/or the information on the location of the device itself on the network, and
a functional unit configured to receive from the authentication server a communication control policy corresponding to the information on the location of the device itself and/or the information on the location of the device itself on the network, and apply the policy to the device itself, and
wherein the authentication server includes
a functional unit configured to receive from the mobile communication device the information on the location of the device itself and/or the information on the location of the device itself on the network,
a functional unit configured to retrieve from a management table the communication control policy corresponding to the information on the location and/or the information on the location on the network that has been received, and
a functional unit configured to transmit the retrieved communication control policy to the mobile communication device.

2. The network system according to claim 1, wherein the mobile communication device detects a change in the information on the location on the network from a change in an IP address.

3. The network system according to claim 1, wherein the mobile communication device detects a change in the information on the location on the network from a change in SSID of a wireless access point.

4. The network system according to claim 1, wherein the mobile communication device detects a change in the information on the location on the network from a change in MAC address of a wireless access point.

5. The network system according to claim 1, wherein the mobile communication device detects a change in the information on the physical location when an observed value of a GPS of the mobile communication device is outside a predetermined latitude/longitude range.

6. A mobile communication device that together with an authentication server forms part of a network system, comprising:
a functional unit configured to detect a change in information on a physical location of the device itself and/or information on a location of the device itself on a network;
a functional unit configured to, upon detection of the change, transmit to the authentication server the information on the location of the device itself and/or the information on the location of the device itself on the network; and
a functional unit configured to receive from the authentication server a communication control policy corresponding to the information on the location of the device itself and/or the information on the location of the device itself on the network, and apply the policy to the device.

7. A program for causing a computer, which is mounted on a mobile communication device that together with an authentication server forms part of a network system, to execute:
a function of detecting a change in information on a physical location of the device itself and/or information on a location of the device itself on a network;
a function of transmitting to the authentication server the information on the location of the device itself and/or the information on the location of the device itself on the network for which a change has been detected; and
a function of receiving from the authentication server a communication control policy corresponding to the information on the location of the device itself and/or the information on the location of the device itself on the network, and apply the communication control policy to the device itself.
